# EUROPEAN PATENT SPECIFICATION

(11) **EP 1 165 885 B1**
(45) Date of publication and mention of the grant of the patent: **11.09.2002**
(21) Application number: 00902734.3
(22) Date of filing: 09.02.2000
(51) Int. Cl.: D21H 15/02, H01M 2/16

(54) **NONWOVEN WEB**
VLIESBAHN
VOILE DE NONTISSE

(30) Priority: 15.02.1999 GB 9903320
(43) Date of publication of application: 02.01.2002
(73) Proprietor: JOHNSON MATTHEY PUBLIC LIMITED COMPANY, London SW1Y 5BQ (GB)
(72) Inventor: BROWN, Karen Leanne, Sonning Common, Reading RG4 9RU (GB); GASCOYNE, John Malcolm, High Wycombe, Bucks HP14 4BB (GB); RALPH, Thomas, Robertson, Reading RG30 2QJ (GB)
(74) Representative: Wishart, Ian Carmichael
(86) International application number: GB0000390
(87) International publication number: WO00047816

(56) References cited:
- EP-A- 0 791 974
- EP-A- 0 875 524
- FR-A- 2 468 219

## Description

The present invention relates to a non-woven fibre web a porous gas diffusion substrate and a porous gas diffusion electrode which may have application in electrochemical devices, for use for example in a fuel cell, and a process for the manufacture of the web, substrate and electrode.

Electrochemical cells invariably comprise at their fundamental level a solid or liquid electrolyte and two electrodes, the anode and cathode, at which the desired electrochemical reactions take place. Gas diffusion electrodes are employed in a range of electrochemical devices, in which a gaseous reactant and/or product has to be diffused into and/or out of one of the cell electrode structures. They are designed to optimise the contact between the reactant and the electrolyte to maximise the reaction rate. Electrocatalysts are often incorporated into gas diffusion electrode structures to increase the rates of the desired electrode reactions.

Gas diffusion electrodes are employed in many different electrochemical devices, including metal-air batteries, electrochemical gas sensors, electrosynthesis of useful chemical compounds, and in particular, fuel cells. Conventionally, gas diffusion electrodes comprise many components and are typically made up of one, two or even morc layers of these components. Typically the gas diffusion electrode will comprise one or more electrocatalyst containing layers, which are supported onto a more rigid porous substrate layer.

A fuel cell is an energy conversion device that efficiently converts the stored chemical energy of its fuel into electrical energy by combining either hydrogen, stored as a gas, or methanol stored as a liquid or gas, with oxygen to generate electrical power. The hydrogen or methanol are oxidised at the anode and oxygen is reduced at the cathode. Both electrodes are of the gas diffusion type. The electrolyte has to be in contact with both electrodes and may be acidic or alkaline, liquid or solid, in nature. In proton exchange membrane fuel cells (PEMFC), the electrolyte is a solid proton-conducting polymer membrane, commonly based on perfluorosulphonic acid materials, and the combined structure formed from the membrane and the two gas diffusion electrodes is known as a membrane electrode assembly (MEA). Alternatively, the MEA may be formed from two porous gas diffusion substrates and a solid proton-conducting polymer membrane catalysed on both sides; or the MEA may be formed from one gas diffusion electrode and one gas diffusion substrate and a solid proton-conducting polymer catalysed on the side facing the gas diffusion substrate. The anode gas diffusion electrode or substrate is designed to be porous and to allow the reactant hydrogen or methanol to enter from the face of the electrode or substrate exposed to the reactant fuel supply, and then to diffuse through the thickness of the electrode or substrate to the reaction sites which contain electrocatalysts, usually platinum metal based, to maximise the electrochemical oxidation of hydrogen or methanol. The anode is also designed to allow electrolyte to penetrate through the face of the electrode or substrate exposed to the electrolyte and to also contact the same reaction sites. With acidic electrolyte types the product of the anode reaction are protons and these can then be efficiently transported from the anode reaction sites through the electrolyte to the cathode gas diffusion electrode or substrate. The cathode is also designed to be porous and to allow oxygen or air to enter the electrode or substrate and diffuse through to the reaction sites. Electrocatalysts are again commonly incorporated to maximise the rate of the reaction at the cathode reaction sites which combines the protons with oxygen to produce water. Product water then has to diffuse out of the cathode structure. The structure of the cathode has to be designed such that it enables the efficient removal of the product water. If water builds up in the cathode, it becomes more difficult for the reactant oxygen to diffuse to the reaction sites, and thus the performance of the fuel cell decreases. In the case of methanol fuelled PEMFCs, additional water is present due to the water contained in the methanol, which can be transported through the membrane from the anode to the cathode side. The increased quantity of water at the cathode requires removal. However, it is also the case with proton conducting membrane electrolytes, that if too much water is removed from the cathode structure, the membrane can dry out resulting in a significant decrease in the performance of the fuel cell.

Traditionally, the gas porous substrates used in the PEMFC are based on high density materials such as rigid carbon fibre paper (i.e. Toray TGP-H-60 or TGP-H-90 from Toray Europe Ltd.. 7 Old Park Lane. London, W1Y 4AD), with a bulk density of 0.49g/cm³ or woven carbon cloths, such as Zoltek PWB-3 (Zoltek Corporation, 3101 McKelvey Road. St. Louis. Missouri 63044) with a bulk density of 1.75g/cm³. Substrates such as these generally have good water management properties but either do not easily allow the passage of the reactant gases, in the case of the carbon fibre paper, or lack dimensional stability, as the cloth can easily be stretched in the directions of the major planar faces (x and y directions). In addition, these types of material are expensive when compared to the material cost estimates needed to make fuels cells competitive with existing technologies, particularly in respect of mobile applications such as cars and buses.

The EP-A-0875524 describes non-woven fibre webs comprising fibers ranging in length from 0.05 to 300 mm.

More recently, electrode structures based on a porous substrate comprising a non-woven network of carbon fibres, with a particulate material embedded within the fibre network as disclosed in EP-A-0 791 974 have shown comparable performances to structures based on carbon fibre paper or cloth, without the drawbacks of such materials, and at much lower fibre bulk densities, typically below 0.1g/cm³. Electrodes based on non-woven carbon fibre structures such as Optimat® 203, of bulk density 0.07g/cm³ (from Technical Fibre Products, Kendal, Cumbria, UK) give a physically strong, dimensionally stable and handleable structure at a cost compatible with motive power applications. However, although the gas diffusion properties of such substrates are very good, the structure lacks the ability to retain sufficient water, when operating at high current densities, to maintain optimum hydration of the membrane. As a consequence the resistance of the membrane increases with a commensurate loss in overall performance.

It is therefore an object of the present invention to provide a porous substrate, suitable for use for example in a gas diffusion electrode, which maintains the strength and flexibility of the non-woven carbon fibre network substrate and retains the good gas diffusion properties, but also has greatly improved water management properties. Control of these properties is highly important to ensure the optimum functioning of the PEMFC which may operate under a range of conditions of, for example, temperature, pressure. reactant gas flow rates and reactant gas level of humidification.

Accordingly, the present invention provides a non-woven fibre web comprising a plurality of longer fibres in the x- and y-directions of average length greater than 5mm and a plurality of shorter fibres of average length less than 3mm wherein at least a proportion of the fibres of average length less than 3mm are orientated in the z-direction, and wherein the proportion of fibres of average length less than 3mm is at least 20% of the total weight of fibres, and wherein the density of the non-woven fibre web is from 0.1g/cm³ to 0.35g/cm³. The present invention also provides a non-woven fibre web comprising up to and including 80% by weight of longer fibres in the x- and y-directions of average length greater than 5mm. and 20% or more by weight of shorter fibres of average length less than 3mm wherein at least a proportion of the fibres of average length of less than 3mm are orientated in the z-direction, and wherein the density of the non-woven fibre web is from 0.1g/cm³ to 0.35g/cm³.

The fibres of average length of greater than 5mm (the "longer fibres") impart physical strength to the web, whilst the fibres of average length of less than 3mm (the "shorter fibres") enable the density of the web to be increased beyond that which is possible with longer fibres alone. As the proportion of shorter fibres increases so the strength of the web decreases and accordingly the proportion of shorter fibres is suitably no more than 85% by weight of total fibres in the substrate, preferably no more than 70% by weight of the total fibres.

The longer fibres will all be orientated in the x- and y-directions, while the shorter fibres may be orientated in the x-, y- and z-directions.

The longer fibres are of average length greater than 5mm and suitably have a maximum average length of 50mm. The preferred average length of the fibres is 5mm to greater than 30mm. The diameter of the longer fibres is typically in the range of 0.2µm to 25µm, preferably in the range of 2µm to 20µm.

The shorter fibres are of average length less than 3mm and suitably are of average length less than 2mm, preferably less than 1mm. The shorter fibres suitably have a minimum average length of 50µm, preferably 100µm. The diameter of the shorter fibres is typically in the range of 0.1µm to 20µm, preferably in the range of 0.4µm to 10µm. Examples of such fibres include e.g. spun fibres and carbon fibre wools of type FRC 15 (ex Le Carbone (GB) Ltd) which are composed of mixed lengths generally between about 0.2mm and about 2mm.

Fibres which are suitable for use for the longer fibres and the shorter fibres include carbon, glass, silica, polymer, metal or ceramic fibres, preferably carbon, silica, metal or ceramic, most preferably carbon. The fibres used to the longer and shorter fibres may be of the same material or different.

The density of the non-woven fibre web is suitably greater than 0.1g/cm³; suitably the maximum density of the non-woven fibre web is 0.35g/cm³. The preferred range is from 0.1g/cm³ to 0.2g/cm³.

The fibres in the web are held together by a polymer (the "final polymer"). Depending on the polymeric substance used it may also contribute to the essential electrode structural properties in a gas diffusion substrate or electrode. such as control of the hydrophobic/hydrophilic balance. Examples of such polymers include polytetrafluoroethylene (PTFE), fluorinated ethylene-propylene (FEP), polyvinylidene difluoride (PVDF), Viton A, polyethylene, polypropylene, ethylene-propylene. The preferred final polymer is PTFE or FEP.

The non-woven web may be made by a single individual process or by adapting a continuous manufacturing process, such as paper making. In both cases the fibres (long and short) are dispersed in solution, preferably water, to form a slurry. Also added to the slurry are one or more polymers as the first polymer, preferably hydrophilic polymers, for example polyvinylalcohol (PVA). The first polymer may be in the form of fibres. Once the long and short fibres and the first polymer are uniformly dispersed in the liquid. the liquid is either drained in the case of a single individual process or the fibres are formed into a continuous structure by the controlled deposition of the slurry onto a moving bed mesh. The web so-formed is dried in an oven, and if necessary placed in a solution of the final polymer, which may or may not be the same as the first polymer, allowed to dry and subsequently heat treated to set the final polymer, if used, or to set the first polymer. If it is not desirable for the first polymer to remain in the final web structure, it may be removed by this heat treatment or by an alternative appropriate process. In addition, any undesirable residues may be removed by the heat treatment or by an alternative appropriate process.

A second embodiment of the invention provides a gas diffusion substrate comprising a non-woven fibre web as hereinbefore defined and a filler material. The filler material is for the purpose of providing suitable gas diffusion, electrical conductivity and water management properties when employed as a gas diffusion substrate. Suitably, the filler material comprises a particulate carbon and a polymer, the carbon suitably being in the form of a powder. The carbon powder may be any of the materials generally designated as carbon black such as acetylene blacks, furnace blacks, pitch coke based powders and graphitised versions of such materials. Suitably also both natural and synthetic graphites may be used in this application. Such materials may be used either alone or in combination. The particulate carbon, or carbons, in the fill are held together by one or more polymers. The polymeric materials used will contribute to the essential electrode structural properties such as control of the hydrophobic/hydrophilic balance. Examples of such polymers include polytetrafluoroethylene (PTFE), fluorinated ethylene-propylene (FEP), polyvinylidene difluoride (PVDF), Viton A, polyethylene, polypropylene, ethylene-propylene. The preferred final polymer is PTFE or FEP.

The filler material may further comprises a catalyst other than an electrocatalyst, for example a gas phase catalyst, which is designed to remove contaminant gases in the fuel or oxidant feed streams as for example carbon monoxide in the hydrogen fuel, when this is supplied from a reformer.

The most appropriate method for the manufacture of the gas diffusion substrate is to prepare the non-woven fibre web, for example using the method hereinbefore described, and subsequently in-filling with the filler material. The majority of the filler material will be forced into the structure of the non-woven fibre web, although a small quantity may remain on the surface. Alternatively, a continuous manufacturing process similar to that used to prepare the non-woven fibre web may be used, the filler material being added to the slurry.

A third aspect of the invention provides a gas diffusion electrode comprising a gas diffusion substrate as hereinbefore described and an electrocatalyst material. The electrocatalyst material is applied as a thin layer to the surface of the gas diffusion substrate. Some of the electrocatalyst material may penetrate slightly into the substrate, the remaining material forming a layer on the surface of the substrate. The electrocatalyst material comprises one or more electrocatalytic components and a polymer. Suitable polymers include hydrophobic polymers, such as PTFE and/or proton conducting polymers, such as Nafion® (ex DuPont). The electrocatalytic component is defined as a substance that promotes or enhances the rate of the electrochemical reaction of interest but remains unaltered by the reaction. The electrocatalytic component or components selected will depend on the application for which the gas diffusion electrode is being used. These may be, for example, a precious metal or a transition metal as the metal or metal oxide, either unsupported or supported in a dispersed form on a carbon support; a carbon or an organic complex, in the form of a high surface area finely divided powder or fibre, or a combination of these options. An example of a suitable electrocatalyst material is described in EP-A-0 731 520.

A fourth aspect of the invention provides a membrane electrode assembly comprising a gas diffusion electrode of the invention as hereinbefore defined and a second gas diffusion electrode which may or may not be an electrode according to the invention, and a solid polymer membrane, for example Nafion®. Alternatively, the invention provides a membrane electrode assembly comprising a gas diffusion electrode of the invention as hereinbefore defined, a gas diffusion substrate which may or may not be a substrate according to the invention and a solid polymer membrane, for example Nafion®, wherein an electrocatalyst layer is applied to the side of the membrane facing the gas diffusion substrate. Alternatively, the invention provides a membrane electrode assembly comprising a gas diffusion substrate of the invention as hereinbefore defined, a gas diffusion electrode which may or may not be an electrode according to the invention and a solid polymer membrane, for example Nation®, wherein an electrocatalyst layer is applied to the side of the membrane facing the gas diffusion substrate. Alternatively, the invention provides a membrane electrode assembly comprising a gas diffusion substrate of the invention as hereinbefore defined and a second gas diffusion substrate which may or may not be a substrate according to the invention, and a solid polymer membrane, for example Nafion®, wherein an electrocatalyst layer is applied to both sides of the solid polymer membrane.

A still further aspect of the invention provides a fuel cell comprising a gas diffusion substrate according to the present invention. A further aspect provides a fuel cell comprising a gas diffusion electrode according to the present invention.

The invention will now be further described with reference to the following Examples (according to the invention) and Comparative Example (not according to the invention).

The materials of the invention can be employed as either the anode or cathode, and indeed both anode and cathode in the electrochemical cells of the specific application. In the following examples, the electrodes are incorporated as the cathode in membrane electrode assemblies (MEAs) and evaluated in a proton exchange membrane fuel cell, with hydrogen as the anode fuel and air or pure oxygen as the cathode oxidant. It is at the cathode that the majority of cell performance (voltage) losses occur in cells operating with hydrogen as the fuel. The MEAs were fabricated by hot pressing the anode and cathode against each face of the solid proton conducting electrolyte membrane as is commonly practiced in the art.

The anodes were of the more conventional type, currently widely employed in the PEMFC. They comprised a convention pre-teflonated rigid conducting carbon fibre paper substrate (Toray TGP-H-090, available from Toray Industries Inc., Tokyo, Japan) to which was applied a layer of a 20wt% platinum, 10wt% ruthenium catalyst, supported on Cabot's Vulcan® XC72R (from Johnson Matthey Inc., New Jersey, USA), at an electrode platinum loading of 0.25mg/cm² of electrode geometric area. The MEAs were evaluated in a PEMFC single cell, with a geometric electrochemically active area of 240cm². The single cell consisted of graphite plates into which flowfields were machined to distribute reactant gases and humidification water, and remove products. The MEA was located between the flow-field plates. The operation of the single cell was controlled from a purpose built test station facility. The "performance" of the fuel cell was assessed by measuring the voltage and current density relationship using a standard operating procedure. Unless otherwise stated, these conditions were typically, a reactant gas inlet temperature of 80°C, a pressure of both anode and cathode reactant gases of 3 atmosphere, and a reactant stoichiometry of 1.5 for hydrogen and 2.0 for air.

### COMPARATIVE EXAMPLE 1

### (not according to the invention)

" A preformed non-woven carbon fibre structure was a 17g/m² (equivalent to 0.07g/cm³) density carbon fibre paper (Optimat® 203, ex Technical Fibre Products, Kendal, Cumbria, UK). This was pre-coated with polytetrafluoroethylene (PTFE) by soaking the cloth for 1 minute in a solution of 20 parts by weight of PTFE emulsion (ICI's Fluon® dispersion GP1) in 500 parts by weight of water then draining and allowing to dry. The coated carbon fibre paper was heated to 350°C in air to sinter the PTFE.

The particulate material (the "filler material") used for embedding within the fibre network was provided by dispersing 47 weight parts of acetylene black (Shawinigan black from Chevron Chemicals, Houston. Texas, USA) in 1200 parts of water. To this was added 3 weight parts of PTFE as a dispersion in water (ICI's Fluon® dispersion GP1, 64 wt% solids suspension) and the mixture stirred to entrain the PTFE particles within the carbon black. The resultant material was dispersed using a high shear mixer (Silverson L4R) to produce a smooth mixture.

The particulate material was pressed into the non-woven carbon fibre structure from one side, and leveled off using a metal edge. The sheet was then dried at 200°C for 1 minute. A further thin layer of the particulate material was applied to the same side; the structure was sandwiched between two sheets of filter paper and passed through a set of rollers to compact the layer. The sheet was then dried at 200°C for 1 minute. This process was then repeated for the second side. Further additions of thin layers of the particulate material were applied to each side with compaction and drying until a loading of 3.33mg/cm² of carbon was achieved. The resulting gas diffusion substrate sheet was fired, in air, to 200°C for 30 minutes.

A catalyst material used for forming the electrocatalyst layer on the gas diffusion substrate was provided by dispersing 100 weight parts of a 40 weight % platinum on carbon black (Johnson Matthey FC40) in 30 parts of DuPont's Nafion® EW1100 as a 9.5 weight % dispersion in water, according to methods described in EP-A-0 731 520. The particulate catalyst was dispersed using a high shear mixer (Silverson L4R) to produce a smooth ink.

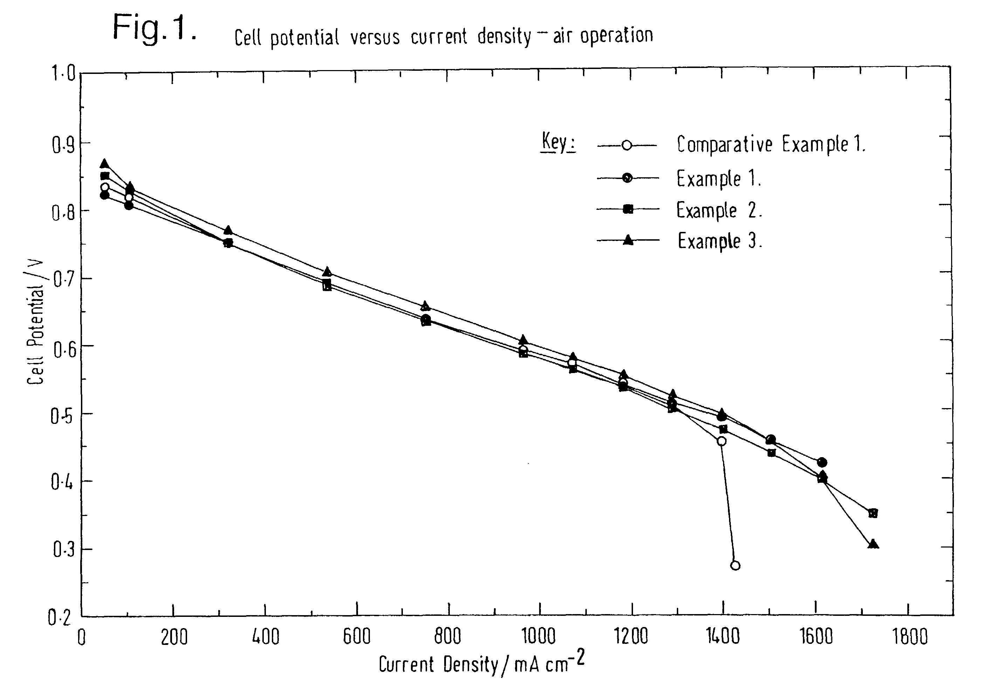

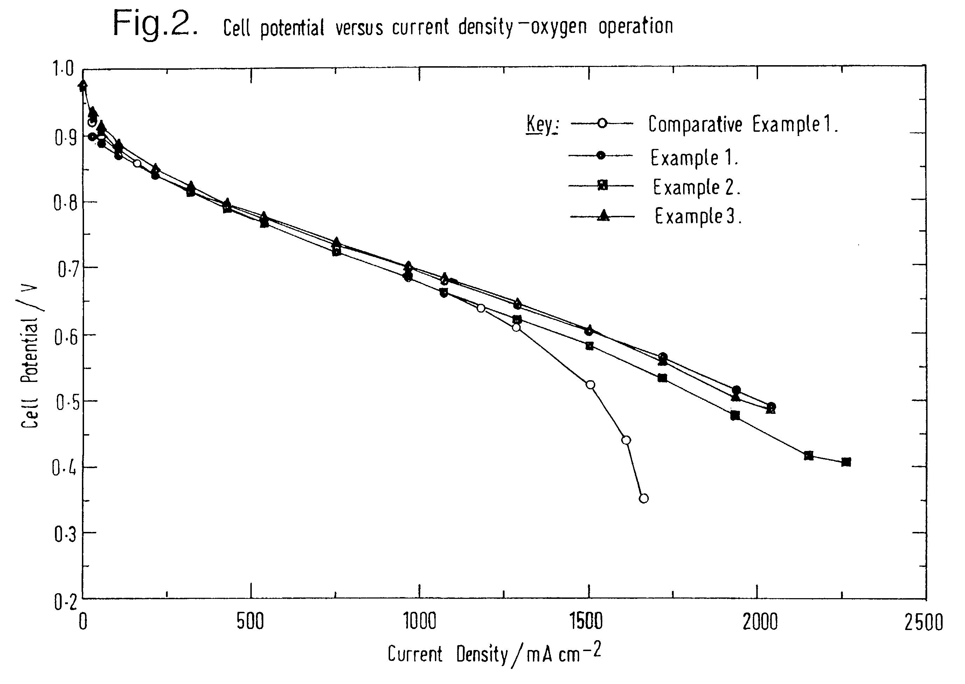

A layer of the catalyst material was then applied to the top face of the filled non-woven gas diffusion substrate, to give a loading of 0.71mg of platinum/cm². The electrode formed the cathode of an MEA, with the platinum electrocatalyst layer bonded to the membrane electrolyte face. The membrane employed was DuPont's Nafion® 112. The single cell results, on air and oxygen are shown in Figures 1 and 2 respectively.

### EXAMPLE 1

1.0g of chopped carbon fibres at a fibre length of 6mm, and 1.0g of chopped carbon fibres at a fibre length of 12mm (type RK 10 supplied by RK Carbon Fibres Ltd.) along with 1.0g of carbon fibre wool composed of mixed lengths between 0.2mm and 2mm (type FRC 15 supplied by Le Carbone (Great Britain) Ltd., Portslade, Sussex, UK) and 0.2g of polyvinyl alcohol fibres (type Mewlon® SML supplied by Unitika Ltd., Oska 541, Japan) were dispersed in 3 litres of water using a standard catering blender. The resulting dispersion was used to prepare a sample of non-woven sheet of size 330mm diameter (855.3cm² ) in a custom built sheet former (similar in general operation to a standard SCA sheet former, as supplied by AB Lorentzen & Wettre, Box 4, S-163 93 Stockholm, Sweden). The sheet was dried at 100°C in air and had a density of 0.116g/cm³.

The non-woven carbon fibre sheet was placed on a sheet of PTFE (skived sheet from Dalau Ltd.. Clacton-on-sea, Essex, UK) and sprayed with a suspension of PTFE 2.3g (ICI's Fluon® dispersion GP1, 64 wt% solids suspension) in 10g of water. Half of the suspension was sprayed on the first side, the sheet dried at 120°C, and the other side sprayed with the remaining suspension. The resulting sheet was fired, in air, to 340°C for 15 minutes, to give a 30% loading of PTFE.

The particulate material (prepared as described above in Comparative Example 1) was pressed into the non-woven carbon fibre sheet from one side, and levelled off using a metal edge. The sheet was then dried at 200°C for 1 minute. A further thin layer of the particulate material was applied to the same side; the structure was sandwiched between two sheets of filter paper and passed through a set of rollers to compact the layer. The sheet was then dried at 200°C for 1 minute. This process was repeated for the second side. Further additions of thin layers of the particulate material were applied alternately to each side, with compaction and drying, until a loading of 3.33mg/cm² of carbon was achieved. The resulting gas diffusion substrate sheet was fired, in air, to 300°C for 30 minutes.

A catalyst material used for forming the electrocatalyst layer on the gas diffusion substrate was provided as described above in Comparative Example 1.

A layer of the electrocatalyst material was then applied to the top face of the filled non-woven gas diffusion substrate, to give a loading of 0.8mg of platinum/cm².

The electrode formed the cathode of an MEA, with the platinum catalyst layer bonded to the membrane electrolyte face. The membrane employed was DuPont's Nafion® 112. The single cell results, on air and oxygen are shown in Figures 1 and 2 respectively.

### EXAMPLE 2

1.0g of chopped carbon fibres at a fibre length of 6mm, and 1.0g of chopped carbon fibres at a fibre length of 12mm (type RK 10 supplied by RK Carbon Fibres Ltd.) along with 1.0g of carbon fibre wool composed of mixed lengths between 0.2mm and 2mm (Type Donacarbo MC232 supplied by Asland-Sudchemie-Kernfest GMBH, Hilden, Germany) and 0.3g of polyvinyl alcohol fibres (type Mewlon® SML supplied by Unitika Ltd., Oska 541, Japan) were dispersed in 3 litres of water using a standard catering blender. The resulting dispersion was used to prepare a sample of non-woven sheet of size 330mm diameter (855.3 cm²) in a custom built sheet former (similar in general operation to a standard SCA sheet former, as supplied by AB Lorentzen & Wettre, Box 4, S-163 93 Stockholm, Sweden). The sheet was dried at 100°C in air and had a density of 0.13g/cm³.

The non-woven carbon fibre sheet was placed on a sheet of PTFE (skived sheet from Dalau Ltd., Clacton-on-sea, Essex, UK) and sprayed with a suspension of PTFE 2.3g (ICI's Fluon® dispersion GP1, 64 wt% solids suspension) in 10g of water. Half of the suspension was sprayed on the first side, the sheet dried at 120°C, and the other side sprayed with the remaining suspension. The resulting sheet was fired, in air, to 340°C for 15 minutes, to give a 30% loading of PTFE.

The particulate material (prepared as described above in Comparative Example 1) was pressed into the non-woven carbon fibre sheet from one side, and levelled off using a metal edge. The sheet was then dried at 200°C for 1 minute. A further thin layer of the particulate material was applied to the same side; the structure was sandwiched between two sheets of filter paper and passed through a set of rollers to compact the layer. The sheet was then dried at 200°C for 1 minute. This process was repeated for the second side. Further additions of thin layers of the particulate material were applied alternately to each side, with compaction and drying, until a loading of 6.03mg/cm² of carbon was achieved. The resulting gas diffusion substrate sheet was fired, in air, to 300°C for 30 minutes.

A catalyst material used for forming the electrocatalyst layer on the gas diffusion substrate was provided as described above in Comparative Example 1.

A layer of the electrocatalyst material was then applied to the top face of the filled non-woven gas diffusion substrate, to give a loading of 0.73mg of platinum/cm².

The electrode formed the cathode of an MEA, with the platinum catalyst layer bonded to the membrane electrolyte face. The membrane employed was DuPont's Nafion® 112. The single cell results, on air and oxygen are shown in Figures 1 and 2 respectively.

### EXAMPLE 3

1.0g of chopped carbon fibres at a fibre length of 6mm, and 1.0g of chopped carbon fibres at a fibre length of 12mm (type RK 10 supplied by RK Carbon Fibres Ltd.) along with 1.0g of carbon fibre wool composed of mixed lengths between 0.2mm and 2mm (Type Donacarbo S232 supplied by Asland-Sudchemie-Kernfest GMBH, Hilden, Germany) and 0.25g of polyvinyl alcohol fibres (type Mewlon® SML supplied by Unitika Ltd., Oska 541, Japan) were dispersed in 3 litres of water using a standard catering blender. The resulting dispersion was used to prepare a sample of non-woven sheet of size 330mm diameter (855.3cm² ) in a custom built sheet former (similar in general operation to a standard SCA sheet former, as supplied by AB Lorentzen & Wettre, Box 4, S-163 93 Stockholm, Sweden). The sheet was dried at 100°C in air and had a density of 0.12g/cm³.

The non-woven carbon fibre sheet was placed on a sheet of PTFE (skived sheet from Dalau Ltd., Clacton-on-sea, Essex, UK) and sprayed with a suspension of PTFE 2.3g (ICI's Fluon® dispersion GP1, 64 wt% solids suspension) in 10g of water. Half of the suspension was sprayed on the first side, the sheet dried at 120°C, and the other side sprayed with the remaining suspension. The resulting sheet was fired, in air, to 340°C for 15 minutes, to give a 30% loading of PTFE.

The particulate material (prepared as described above in Comparative Example 1) was pressed into the non-woven carbon fibre sheet from one side, and levelled off using a metal edge. The sheet was then dried at 200°C for 1 minute. A further thin layer of the particulate material was applied to the same side; the structure was sandwiched between two sheets of filter paper and passed through a set of rollers to compact the layer. The sheet was then dried at 200°C for 1 minute. This process was repeated for the second side. Further additions of thin layers of the particulate material were applied alternately to each side, with compaction and drying, until a loading of 5.6mg/cm² of carbon was achieved. The resulting gas diffusion substrate sheet was fired, in air, to 300°C for 30 minutes.

A catalyst material used for forming the electrocatalyst layer on the gas diffusion substrate was provided as described above in Comparative Example 1.

A layer of the electrocatalyst material was then applied to the top face of the filled non-woven gas diffusion substrate, to give a loading of 0.71mg of platinum/cm².

The electrode formed the cathode of an MEA, with the platinum catalyst layer bonded to the membrane electrolyte face. The membrane employed was DuPont's Nafion® 112. The single cell results, on air and oxygen are shown in Figures 1 and 2 respectively.

The cell potential versus current density performance of the electrodes in Comparative Test 1 (not according to the invention) is typical of the performance of an electrode produced by filling conventional non-woven carbon structures. The gas diffusion properties of such substrates are very good, with the fall-off in air performance above 1200mA/cm² being due to the structure's inability to retain sufficient water to maintain optimum hydration of the membrane, when operating at high current densities. As a consequence, the resistance of the membrane increases with increasing current density giving rise to a commensurate loss in overall performance. This is also seen in the fall-off in oxygen performance, with increasing current density at a similar point to the air operation (the use of oxygen by removing the mass transport issues seen with air operation confirms that the losses on air are not due to mass transport effects) as shown in Figures 1 and 2.

The structure of the non-woven gas diffusion substrate of the present invention, overcomes these problems of water retention and maintains membrane hydration out to much higher current densities on both air and oxygen operation as can be seen from the cell potential versus current density plots for Example 1, 2 and 3 in Figures 1 and 2.

## Claims

1. A non-woven fibre web comprising a plurality of longer fibres in the x- and y-directions of average length greater than 5mm and a plurality of shorter fibres of average length less than 3mm wherein at least a proportion of the fibres of average length less than 3mm are orientated in the z-direction, and wherein the proportion of fibres of average length less than 3mm is at least 20% of the total weight of fibres, and wherein the density of the non-woven fibre web is from 0.1g/cm³ to 0.35g/cm³.

2. A non-woven fibre web comprising up to and including 80% by weight of longer fibres in the x- and y-directions of average length greater than 5mm, and 20% or more by weight of shorter fibres of average length less than 3mm wherein at least a proportion of the fibres of average length of less than 3mm are orientated in the z-direction, and wherein the density of the non-woven fibre web is from 0.1g/cm³ to 0.35g/cm³.

3. A non-woven fibre web according to claim 1 or claim 2 wherein the proportion of shorter fibres is suitably no more than 85% by weight of total fibres in the substrate.

4. A non-woven fibre web according to claim 3 wherein the proportion of shorter fibres is suitably no more that 70% by weight of the total fibres.

5. A non-woven fibre web according to any of claims 1 to 4 wherein the longer fibres suitably have a maximum average length of 50mm.

6. A non-woven fibre web according to claim 5 wherein the longer fibres are of average length greater than 5mm to 30mm.

7. A non-woven fibre web according to any preceding claim wherein the shorter fibres are of average length less than 2mm.

8. A non-woven fibre web according to claim 7 wherein the shorter fibres are of average length less than 1mm.

9. A non-woven fibre web according to any preceding claim wherein the shorter fibres have an average minimum length of 50µm.

10. A non-woven fibre web according to any preceding claim wherein the longer fibres and shorter fibres are independently selected from the group consisting of carbon, glass, silica, polymer, metal and ceramic fibres.

11. A non-woven fibre web according to claim 10 wherein the longer fibres and shorter fibres are carbon.

12. A non-woven fibre web according to any preceding claim wherein the density of the non-woven fibre web is from 0.1 g/cm³ to 0.2g/cm³.

13. A process for the preparation of a non-woven fibre web according to any preceding claim, said process comprising the steps of:
(i) dispersing the longer and shorter fibres in solution to form a slurry;
(ii) adding one or more polymers as the first polymer to the slurry;
(iii) draining the liquid from the slurry to form a web, or forming a continuous structure by the controlled deposition of the slurry onto a moving bed mesh;
(iv) drying the web;
(v) optionally placing the web in a solution of polymer as the "final polymer;
(vi) drying the web; and
(vii) heat treating the web.

14. A gas diffusion substrate comprising a non-woven fibre web as claimed in any one of claims 1 to 12, and a filler material.

15. A gas diffusion substrate according to claim 14 wherein the filler material comprises particulate carbon and a polymer.

16. A gas diffusion substrate according to claim 14 or claim 15 wherein the filler material comprises a catalyst material.

17. A gas diffusion electrode comprising a gas diffusion substrate as claimed in any one of claims 14, 15 and 16, and an electrocatalyst material.

18. A gas diffusion electrode according to claim 17, wherein the electrocatalyst material comprises one or more electrocatalytic components and a polymer.

19. A gas diffusion electrode according to claim 18, wherein the electrocatalyst material is a precious metal or a transition metal as the metal or metal oxide, either unsupported or supported in a dispersed form on a carbon support; a carbon or an organic complex, in the form of a high surface area finely divided powder or fibre, or a combination of these options.

20. A membrane electrode assembly comprising a gas diffusion electrode as claimed in any one of claims 17, 18 and 19, a second gas diffusion electrode which may or may not be an electrode as claimed in any one of claims 17, 18 and 19, and a solid polymer membrane.

21. A membrane electrode assembly comprising a gas diffusion electrode as claimed in any one of claims 17, 18 and 19, a gas diffusion substrate which may or may not be a substrate as claimed in any one of claims 14, 15 and 16, and a solid polymer membrane, wherein an electrocatalyst layer is applied to the side of the membrane facing the gas diffusion substrate.

22. A membrane electrode assembly comprising a gas diffusion substrate as claimed in any one of claims 14, 15 and 16, a gas diffusion electrode which may or may not be an electrode as claimed in any one of claims 17, 18 and 19, and a solid polymer membrane, wherein an electrocatalyst layer is applied to the side of the membrane facing the gas diffusion substrate.

23. A membrane electrode assembly comprising a gas diffusion substrate as claimed in any one of 14, 15 and 16, and a second gas diffusion substrate which may or may not be a substrate as claimed in any one of claims 14, 15 and 16, and a solid polymer membrane, wherein an electrocatalyst layer is applied to both sides of the solid polymer membrane.

24. A fuel cell comprising a gas diffusion substrate as claimed in any one of claims 14, 15 and 16.

25. A fuel cell comprising a gas diffusion electrode as claimed in any one of claims 17, 18 and 19.

## Patentansprüche

1. Faservlies- bzw. Vliesstoff-Bahn, die umfasst eine Vielzahl von längeren Fasern in den x- und y-Richtungen mit einer durchschnittlichen Länge von mehr als 5 mm und eine Vielzahl von kürzeren Fasern mit einer durchschnittlichen Länge von weniger als 3 mm, wobei mindestens ein Teil der Fasern mit einer durchschnittlichen Länge von weniger als 3 mm in der z-Richtung orientiert ist und wobei der Mengenanteil der Fasern mit einer durchschnittlichen Länge von weniger als 3 mm mindestens 20 % des Gesamtgewichts der Fasern beträgt und die Dichte der Faservlies- bzw. Vliesstoff-Bahn 0,1 bis 0,35 g/cm³ beträgt.

2. Faservlies-Bahn, die bis zu einschließlich 80 Gew.-% längere Fasern in den x- und y-Richtungen mit einer durchschnittlichen Länge von mehr als 5 mm und 20 oder mehr Gew.-% kürzere Fasern mit einer durchschnittlichen Länge von weniger als 3 mm enthält, wobei mindestens ein Teil der Fasern mit einer durchschnittlichen Länge von weniger als 3 mm in der z-Richtung orientiert ist, und wobei die Dichte der Faservlies-Bahn 0,1 bis 0,35 g/cm³ beträgt.

3. Faservlies-Bahn nach Anspruch 1 oder 2, worin der Mengenanteil der kürzeren Fasern zweckmäßig nicht mehr als 85 Gew.-%, bezogen auf das Gesamtgewicht der Fasern in dem Substrat, beträgt.

4. Faservlies-Bahn nach Anspruch 3, worin der Mengenanteil der kürzeren Fasern zweckmäßig nicht mehr als 70 Gew.-%, bezogen auf das Gesamtgewicht der Fasern, beträgt.

5. Faservlies-Bahn nach einem der Ansprüche 1 bis 4, worin die längeren Fasern zweckmäßig eine maximale durchschnittliche Länge von 50 mm haben.

6. Faservlies-Bahn nach Anspruch 5, worin die längeren Fasern eine durchschnittliche Länge von mehr als 5 bis 30 mm haben.

7. Faservlies-Bahn nach irgendeinem vorhergehenden Anspruch, worin die kürzeren Fasern eine durchschnittliche Länge von weniger als 2 mm haben.

8. Faservlies-Bahn nach Anspruch 7, worin die kürzeren Fasern eine durchschnittliche Länge von weniger als 1 mm haben.

9. Faservlies-Bahn nach irgendeinem vorhergehenden Anspruch, worin die kürzeren Fasern eine durchschnittliche minimale Länge von 50 µm haben.

10. Faservlies-Bahn nach irgendeinem vorhergehenden Anspruch, worin die längeren Fasern und die kürzeren Fasern unabhängig voneinander ausgewählt werden aus der Gruppe, die besteht aus Carbon-, Glas-, Siliciumdioxid-, Polymer-, Metall- und Keramik-Fasern.

11. Faservlies-Bahn nach Anspruch 10, worin die längeren Fasern und die kürzeren Fasern Carbonfasern sind.

12. Faservlies-Bahn nach irgendeinem vorhergehenden Anspruch, deren Dichte 0,1 bis 0,2 g/cm³ beträgt.

13. Verfahren zur Herstellung einer Faservlies- bzw. Vliesstoff-Bahn nach irgendeinem vorhergehenden Anspruch, das die folgenden Stufen umfasst:
(i) Dispergieren der längeren und kürzeren Fasern in einer Lösung unter Bildung einer Aufschlämmung;
(ii) Zugabe eines oder mehrerer Polymerer als erstes Polymer zu der Aufschlämmung;
(iii) Ablaufenlassen der Flüssigkeit aus der Aufschlämmung unter Bildung einer Bahn oder Bildung einer kontinuierlichen Struktur durch kontrollierte Ablagerung der Aufschlämmung auf einem sich bewegenden Unterlagengitter;
(iv) Trocknen der Bahn;
(v) gegebenenfalls Einführen der Bahn in eine Lösung eines Polymers als Schlusspolymer;
(vi) Trocknen der Bahn und
(vii) Wärmebehandeln der Bahn.

14. Gasdiffusionssubstrat, das eine Faservlies-Bahn nach einem der Ansprüche 1 bis 12 und ein Füllstoffmaterial umfasst.

15. Gasdiffusionssubstrat nach Anspruch 14, worin das Füllstoffmaterial teilchenförmigen Kohlenstoff und ein Polymer umfasst.

16. Gasdiffusionssubstrat nach Anspruch 14 oder 15, worin das Füllstoffmaterial ein Katalysatormaterial umfasst.

17. Gasdiffusionselektrode, die ein Gasdiffusionssubstrat nach einem der Ansprüche 14, 15 und 16 und ein Elektrokatalysator-Material umfasst.

18. Gasdiffusionselektrode nach Anspruch 17, worin das Elektrokatalysator-Material eine oder mehr elektrokatalytische Komponenten und ein Polymer umfasst.

19. Gasdiffusionselektrode nach Anspruch 18, worin das Elektrokatalysator-Material ein Edelmetall oder ein Übergangsmetall in Form des Metalls oder des Metalloxids entweder ohne Träger oder aufgebracht in einer dispergierten Form auf einen Kohlenstoff-Träger, ein Kohlenstoff oder ein organischer Komplex in Form eines feinteiligen Pulvers oder einer feinteiligen Faser mit großer spezifischer Oberfläche oder eine Kombination dieser Optionen ist.

20. Membran-Elektroden-Anordnung (MEA), die eine Gasdiffusions-Elektrode nach einem der Ansprüche 17, 18 und 19, eine zweite Gasdiffusions-Elektrode, die eine Elektrode nach einem der Ansprüche 17, 18 und 19 oder eine andere Elektrode sein kann, und eine feste Polymermembran umfasst.

21. Membran-Elektroden-Anordnung, die eine Gasdiffusions-Elektrode nach einem der Ansprüche 17, 18 und 19, ein Gasdiffusionssubstrat, das ein Substrat nach einem der Ansprüche 14, 15 und 16 oder ein anderes Substrat sein kann, und eine feste Polymermembran umfasst, wobei eine Elektrokatalysatorschicht auf die Seite der Membran aufgebracht ist, die dem Gasdiffusionssubstrat gegenüberliegt.

22. Membran-Elektroden-Anordnung, die ein Gasdiffusionssubstrat nach einem der Ansprüche 14, 15 und 16, eine Gasdiffusionselektrode, die eine Elektrode nach einem der Ansprüche 17, 18 und 19 oder eine andere Elektrode sein kann, und eine feste Polymermembran umfasst, wobei eine Elektrokatalysatorschicht auf die Seite der Membran aufgebracht ist, die dem Gasdiffusionssubstrat gegenüberliegt.

23. Membran-Elektroden-Anordnung, die ein Gasdiffusionssubstrat nach einem der Ansprüche 14, 15 und 16 und ein zweites Gasdiffusionssubstrat, das ein Substrat nach einem der Ansprüche 14, 15 und 16 oder ein anderes Substrat sein kann, und eine feste Polymermembran umfasst, wobei eine Elektrokatalysatorschicht auf beide Seiten der festen Polymermembran aufgebracht ist.

24. Brennstoffzelle, die ein Gasdiffusionssubstrat nach einem der Ansprüche 14, 15 und 16 umfasst.

25. Brennstoffzelle, die eine Gasdiffusionselektrode nach einem der Ansprüche 17, 18 und 19 umfasst.

## Revendications

1. Bande de fibres non-tissée comportant une pluralité de fibres plus longues dans les directions x et y ayant une longueur moyenne plus grande que 5 mm et une pluralité de fibres plus courtes ayant une longueur moyenne plus petite que 3 mm, dans laquelle au moins une proportion des fibres de longueur moyenne plus petite que 3 mm sont orientées dans la direction z, et dans laquelle la proportion des fibres de longueur moyenne plus petite que 3 mm est d'au moins 20 % du poids total de fibres, et dans laquelle la densité de la bande de fibres non-tissée est comprise entre 0,1 g/cm³ et 0,35 g/cm³.

2. Bande de fibres non-tissée comportant jusqu'à y compris 80 % en poids de fibres plus longues dans les directions x et y, ayant une longueur moyenne plus grande que 5 mm, et 20 % ou plus en poids de fibres plus courtes ayant une longueur moyenne plus petite que 3 mm, dans laquelle au moins une proportion des fibres de longueur moyenne plus petite que 3 mm sont orientées dans la direction z, et dans laquelle la densité de la bande de fibres non-tissée est de 0,1 g/cm³ à 0,35 g/cm³.

3. Bande de fibres non-tissée selon la revendication 1 ou 2, dans laquelle la proportion de fibres plus courtes est de manière adaptée inférieure ou égale à 85 % du poids total de fibres du substrat.

4. Bande de fibres non-tissée selon la revendication 3, dans laquelle la proportion de fibres plus courtes est de manière adaptée inférieure ou égale 70 % du poids total de fibres.

5. Bande de fibres non-tissée selon l'une quelconque des revendications 1 à 4, dans laquelle les fibres plus longues ont de manière adaptée une longueur moyenne maximum de 50 mm.

6. Bande de fibres non-tissée selon la revendication 5, dans laquelle les fibres plus longues ont une longueur moyenne plus grande que 5 mm allant jusqu'à 30 mm.

7. Bande de fibres non-tissée selon l'une quelconque des revendications précédentes, dans laquelle les fibres plus courtes ont une longueur moyenne plus petite que 2 mm.

8. Bande de fibres non-tissée selon la revendication 7, dans laquelle les fibres plus courtes ont une longueur moyenne plus petite que 1 mm.

9. Bande de fibres non-tissée selon l'une quelconque des revendications précédentes, dans laquelle les fibres plus courtes ont une longueur moyenne minimum de 50 µm.

10. Bande de fibres non-tissée selon l'une quelconque des revendications précédentes, dans laquelle les fibres plus longues et les fibres plus courtes sont sélectionnées de manière indépendante parmi le groupe constitué de fibres de carbone, de verre, de silice, de polymère, de métal et de céramique.

11. Bande de fibres non-tissée selon la revendication 10, dans laquelle les fibres plus longues et les fibres plus courtes sont en carbone.

12. Bande de fibres non-tissée selon l'une quelconque des revendications précédentes, dans laquelle la densité de la bande de fibres non-tissée est de 0,1 g/cm³ à 0,2 g/cm³.

13. Procédé de préparation d'une bande de fibres non-tissée selon l'une quelconque des revendications précédentes, ledit procédé comportant les étapes consistant à :
(i) disperser les fibres plus longues et plus courtes en solution pour former une boue,
(ii) ajouter un ou plusieurs polymères, en tant que premier polymère, à la boue,
(iii) évacuer le liquide à partir de la boue pour former une bande, ou former une structure continue par le dépôt commandé de la boue sur des tamis formant lit mobile,
(iv) sécher la bande,
(v) placer facultativement la bande dans une solution de polymère en tant que polymère final,
(vi) sécher la bande, et
(vii) traiter la bande à chaud.

14. Substrat de diffusion gazeuse comportant une bande de fibres non-tissée selon l'une quelconque des revendications 1 à 12, et un matériau de charge.

15. Substrat de diffusion gazeuse selon la revendication 14, dans lequel le matériau de charge est constitué de carbone particulaire et d'un polymère.

16. Substrat de diffusion gazeuse selon la revendication 14 ou 15, dans lequel le matériau de charge est constitué d'un matériau de catalyse.

17. Electrode de diffusion gazeuse comportant un substrat de diffusion gazeuse selon l'une quelconque des revendications 14, 15 et 16, et un matériau d'électro-catalyse.

18. Electrode de diffusion gazeuse selon la revendication 17, dans laquelle le matériau d'électro-catalyse est constitué d'un ou plusieurs composants électro-catalytiques et d'un polymère.

19. Electrode de diffusion gazeuse selon la revendication 18, dans laquelle le matériau d'électro-catalyse est un métal précieux ou un métal de transition sous la forme d'un métal ou d'un oxyde métallique, non-supporté ou supporté sous une forme dispersée sur un support de carbone, d'un carbone ou d'un complexe organique, ayant la forme d'une poudre ou de fibres finement divisées à surface superficielle élevée, ou d'une combinaison de ces options.

20. Ensemble d'électrode à membrane comportant une électrode de diffusion gazeuse selon l'une quelconque des revendications 17, 18 et 19, une seconde électrode de diffusion gazeuse qui peut être ou ne pas être une électrode selon l'une quelconque des revendications 17, 18 et 19, et une membrane de polymère pleine.

21. Ensemble d'électrode à membrane comportant une électrode de diffusion gazeuse selon l'une quelconque des revendications 17, 18 et 19, un substrat de diffusion gazeuse qui peut être ou ne pas être un substrat selon l'une quelconque des revendications 14, 15 et 16, et une membrane de polymère pleine, dans lequel une couche d'électro-catalyseur est appliquée sur le côté de la membrane dirigé vers le substrat de diffusion gazeuse.

22. Ensemble d'électrode à membrane comportant un substrat de diffusion gazeuse selon l'une quelconque des revendications 14, 15 et 16, une électrode de diffusion gazeuse qui peut être ou ne pas être une électrode selon l'une quelconque des revendications 17, 18 et 19, et une membrane de polymère pleine, dans lequel une couche d'électro-catalyseur est appliquée sur le côté de la membrane dirigé vers le substrat de diffusion gazeuse.

23. Ensemble d'électrode à membrane comportant un substrat de diffusion gazeuse selon l'une quelconque des revendications 14, 15 et 16, et un second substrat de diffusion gazeuse qui peut être ou ne pas être un substrat selon l'une quelconque des revendications 14, 15 et 16, et une membrane de polymère pleine, dans lequel la couche d'électro-catalyseur est appliquée sur les deux côtés de la membrane de polymère pleine.

24. Pile à combustible comportant un substrat de diffusion gazeuse selon l'une quelconque des revendications 14, 15 et 16.

25. Pile à combustible comportant une électrode de diffusion gazeuse selon l'une quelconque des revendications 17, 18 et 19.
